# EUROPEAN PATENT SPECIFICATION

(11) **EP 3 882 914 B1**
(45) Date of publication and mention of the grant of the patent: **10.08.2022**
(21) Application number: 20201839.6
(22) Date of filing: 14.10.2020
(51) Int. Cl.: G10L 21/0208, G10L 15/00, G10L 25/03

(54) **VOICE RECOGNITION METHOD, VOICE RECOGNITION APPARATUS, ELECTRONIC DEVICE AND COMPUTER READABLE STORAGE MEDIUM**
SPRACHERKENNUNGSVERFAHREN, SPRACHERKENNUNGSVORRICHTUNG, ELEKTRONISCHES GERÄT UND COMPUTERLESBARES SPEICHERMEDIUM
PROCÉDÉ DE RECONNAISSANCE VOCALE, APPAREIL DE RECONNAISSANCE VOCALE, DISPOSITIF ÉLECTRONIQUE ET SUPPORT D'ENREGISTREMENT LISIBLE PAR ORDINATEUR

(30) Priority: 17.03.2020 CN 202010185078
(43) Date of publication of application: 22.09.2021
(73) Proprietor: Apollo Intelligent Connectivity (Beijing) Technology Co., Ltd., Beijing 100176 (CN)
(72) Inventor: OUYANG, Nengjun, Beijing, 100085, (CN); XU, Junhua, Beijing, 100085 (CN); SONG, Zhengbin, Beijing, 100085 (CN); YANG, Danqing, Beijing, 100085 (CN); XU, Gang, Beijing, 100085 (CN)
(74) Representative: Studio Torta S.p.A.

(56) References cited:
- WO-A1-2019/080552
- CN-A- 110 166 882
- US-A- 5 999 901
- US-A1- 2014 003 611
- US-A1- 2015 371 654
- US-A1- 2019 130 929
- US-B1- 10 546 581

## Description

### TECHNICAL FIELD

The present application relates to the field of voice recognition technology, in particular to a voice recognition method, apparatus, electronic device and computer readable storage medium.

### BACKGROUND

With the increasing demand for road trip comfort, conventional manufacturer-provided car electronics can no longer satisfy users' needs. The car-machine connectivity can effectively compensate for travel needs such as navigation, music playback, and voice control, and thus is increasingly gaining popularity. However, in the case of car-machine connectivity, since the audio playback by the vehicle mounted terminal suffers from significant latency, the noise reduction modes of conventional solutions for recognizing inputted voice cannot meet noise reduction requirements, leading to poor voice recognition performance.

CN 110166882A provides a far-field pickup device including a device body and a microphone pickup unit, where the microphone pickup unit is configured to collect user speech and an echo of a first sound signal output by the device body and transmit to the device body a signal obtained through digital conversion of the collected user speech echo.

US20190130929A1 provides an acoustic delay measurement apparatus measuring an audio delay introduced by an audio system.

US20140003611A1 provides a method for echo reduction by an electronic device including nulling at least one speaker.

US5999901A provides a telephone network apparatus for performing speech recognition services in a telephone system in substantially real time.

US10546581B1 provides an echo cancellation system that synchronizes output audio data with input audio data in a heterogeneous system.

WO2019080552A1 provides an echo cancellation method and apparatus based on time delay estimation.

US20150371654A1 provides a method for determining an estimate of path property of an electronic device.

### SUMMARY

The embodiments of the present application provide a voice recognition method, a voice recognition apparatus, an electronic device and a computer readable storage medium, to solve the problem of poor voice recognition effect in the related art.

To solve the aforementioned technical problem, the present application provides the following solutions.

In a first aspect, the present application provides in an embodiment a voice recognition method, including:
performing a latency estimation according to a first microphone signal and a first reference signal in a preset time period to obtain a latency value;
acquiring a system audio signal, and processing the system audio signal by using the latency value to obtain a second reference signal;
performing de-noising processing on a collected second microphone signal according to the second reference signal, to obtain a to-be-recognized voice signal; and
performing recognition on the to-be-recognized voice signal, where the performing the latency estimation according to the first microphone signal and the first reference signal in the preset time period to obtain the latency value includes:
performing the following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
where the first reference signal of the current time period is obtained by processing a system audio signal of the current time period by using a first latency value obtained in a previous time period.

In this way, the reference signal used for de-noising processing may be obtained based on the latency value derived by means of the latency estimation, so as to ensure that the reference signal and corresponding microphone signal are in alignment and enhance the de-noising effect of the microphone signal, thereby enhancing the recognition effect of the voice signal from the microphone signal.

In this way, a stable and accurate latency value can be acquired by means of the cyclically performed process, thereby ensuring that the subsequently acquired reference signal and the corresponding microphone signal are in alignment.

Optionally, the method further includes: restarting the cyclically performed process when a new latency value is detected, to obtain the new latency value, processing a corresponding system audio signal by using the new latency value to obtain a third reference signal, and performing de-noising processing on a collected third microphone signal according to the third reference signal, to obtain a to-be-recognized voice signal.

In this way, a new latency value can be acquired rapidly and adaptively following the variation of latency value, thereby ensuring that the subsequently acquired reference signal and the corresponding microphone signal are in alignment.

Optionally, the processing the system audio signal by using the latency value to obtain the second reference signal includes: buffering the system audio signal for a duration of the latency value, to obtain the second reference signal.

In this way, the required reference signal may be acquired in a simple and convenient manner by means of the buffering process.

Optionally, after the acquiring the system audio signal, the method further includes:
outputting the system audio signal to a vehicle mounted terminal, to enable the vehicle mounted terminal to play the system audio signal;
where the second microphone signal includes an audio signal collected by a microphone that is played by the vehicle mounted terminal.

In this way, by means of the solution provided in this application, in the case of car-machine connectivity, even if the audio playback by the vehicle mounted terminal suffers from significant transmission latency, the noise reduction requirement during recognition of the inputted voice may still be met, thereby enhancing voice recognition effect.

In a second aspect, the present application further provides in an embodiment a voice recognition apparatus, including:
a latency estimation module, configured to perform a latency estimation according to a first microphone signal and a first reference signal in a preset time period to obtain a latency value;
a first processing module, configured to acquire a system audio signal, and to process
the system audio signal by using the latency value to obtain a second reference signal;
a second processing module, configured to perform de-noising processing on a collected second microphone signal according to the second reference signal, to obtain a to-be-recognized voice signal; and
a recognition module, configured to perform recognition on the to-be-recognized voice signal;
where the latency estimation module is specifically configured to perform the following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
where the first reference signal of the current time period is obtained by processing a system audio signal of the current time period by using a first latency value obtained in a previous time period.

Optionally, the latency estimation module is further configured to restart the cyclically performed process when a new latency value is detected, to obtain the new latency value;
the first processing module is further configured to process a corresponding system audio signal by using the new latency value to obtain a third reference signal;
the second processing module is further configured to perform de-noising processing on a collected third microphone signal according to the third reference signal, to obtain a to-be-recognized voice signal.

Optionally, the first processing module is specifically configured to buffer the system audio signal for a duration of the latency value, to obtain the second reference signal.

Optionally, the apparatus further includes:
an output module, configured to output the system audio signal to a vehicle mounted terminal, to enable the vehicle mounted terminal to play the system audio signal;
where the second microphone signal includes an audio signal collected by a microphone that is played by the vehicle mounted terminal.

In a third aspect, the present application further provides in an embodiment an electronic device, including:
at least one processor; and
a memory communicatively connected to the at least one processor;
where the memory stores therein instructions executable by the at least one processor, and when executed by the at least one processor, the instructions cause the at least one processor to implement the foregoing voice recognition method.

In a fourth aspect, the present application further provides in an embodiment a non-transitory computer readable storage medium storing therein computer instructions, where the computer instructions are configured to, when executed by a computer, cause the computer to implement the foregoing voice recognition method.

Some embodiments of the present application have following advantages or beneficial effects: the reference signal used for de-noising processing may be obtained based on the latency value derived by means of the latency estimation, so as to ensure that the reference signal and corresponding microphone signal are in alignment and enhance the de-noising effect of the microphone signal, thereby enhancing the recognition effect of the voice signal from the microphone signal. Since the following technical means are adopted: performing a latency estimation according to a first microphone signal and a first reference signal in a preset time period to obtain a latency value; acquiring a system audio signal, and processing the system audio signal by using the latency value to obtain a second reference signal; performing de-noising processing on a collected second microphone signal according to the second reference signal, to obtain a to-be-recognized voice signal; and performing recognition on the to-be-recognized voice signal, the problem of a poor voice recognition effect in the related art is overcome, and further the technical effect of enhancing voice recognition effect is achieved.

Other effects of the above optional implementation will be described hereinafter with reference to specific embodiments.

### BRIEF DESCRIPTION OF THE DRAWINGS

The accompany drawings are provided to facilitate a better understanding of the technical solutions of the present application, and by no means, constitute a limitation on the present application.
Fig. 1 is a flow diagram of a voice recognition method according to an embodiment of the present application;
Fig. 2 is framework diagram of a voice recognition process according to a specific example of the present application;
Fig. 3 is a block diagram of a voice recognition apparatus configured to implement a voice recognition method according to an embodiment of the present application;
Fig. 4 is a block diagram of an electronic device configured to implement a voice recognition method according to an embodiment of the present application.

### DETAILED DESCRIPTION

The exemplary embodiments of the present application are described hereinafter with reference to accompany drawings. The details of embodiments of the present application provided in the description are provided to facilitate understanding and are only intended to be exemplary. Those of ordinary skill in the art will appreciate that changes or modifications may be made in the described embodiments. Further, for clarity and conciseness, descriptions of known functions and structures are omitted.

Terms "first", "second" and the like in the specification and claims of this disclosure are adopted not to describe a specific sequence or order but to distinguish similar objects. It should be understood that data used like this may be interchanged under a proper condition for implementation of the embodiments of the present application described herein in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment.

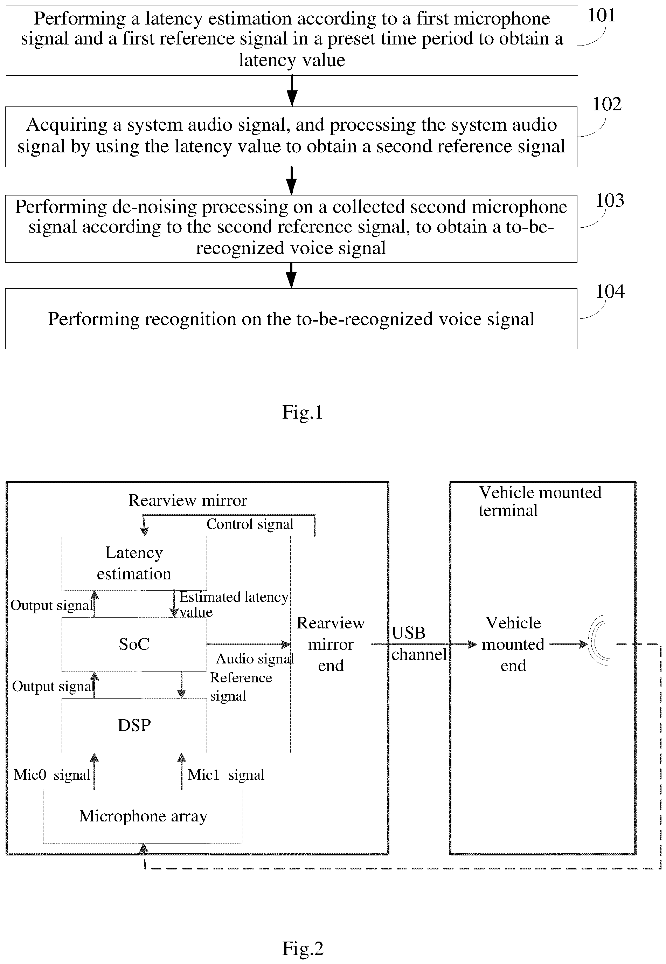

Referring to Fig. 1, a flow diagram of a voice recognition method according to an embodiment of the present application is illustrated. The method is applied to an electronic device and, as shown in Fig. 1, includes the following steps.

Step 101: performing a latency estimation according to a first microphone signal and a first reference signal in a preset time period to obtain a latency value.

In this embodiment, the electronic device may optionally be an aftermarket vehicle mounted device, such as a smart rearview mirror, smart steering wheel, or smart front-view mirror, or the electronic device may optionally be a terminal device connected to the vehicle mounted device, such as a mobile phone, iPad, or smart bracelet, which is not limited herein.

The latency estimation process in this step may be primarily implemented by central processing unit (CPU) of the electronic device, i.e., implemented in software. In this way, the latency value may be estimated rapidly with the aid of powerful computing power of the CPU. The preset time period may be a time period set in advance. The latency value may be understood as a time difference value between a signal in the first microphone signal that corresponds to the first reference signal and the first reference signal.

Step 102: acquiring a system audio signal, and processing the system audio signal by using the latency value to obtain a second reference signal.

In this embodiment, the system audio signal may be understood as raw audio signal to be output or played by the electronic device. For example, the electronic device is connected to a vehicle mounted terminal, the main system on chip (SoC) chip in the electronic device may collect a system audio signal outputted by a codec, encapsulate a corresponding interface (e.g., AudioRecord interface) at a software layer so that the App layer may acquire the system audio signal through the interface, and transmit the system audio signal to the vehicle mounted terminal for playback through a connection channel (e.g., universal serial bus (USB) channel) between the electronic device and the vehicle mounted terminal. The main SoC may be understood as a CPU.

In an implementation, when processing the system audio signal by using the latency value to obtain the second reference signal, the system audio signal may be directly buffered for a duration of the latency value to obtain the second reference signal. In this way, the required reference signal can be acquired by means of the buffering process in a simple and convenient manner. Besides, in this embodiment, the second reference signal may be acquired in another manner, e.g., time adjustment on the system audio signal performed using the latency value.

Step 103: performing de-noising processing on a collected second microphone signal according to the second reference signal, to obtain a to-be-recognized voice signal.

In this embodiment, the de-noising processing in this step may specifically be echo de-noising processing, that is, to eliminate the noise due to echoes. Optionally, the de-noising processing in this step may be implemented by a digital signal processor (DSP) in the electronic device, i.e., implemented in a hard noise reduction manner. In this way, with the latency estimation implemented in software involved, the noise reduction is accomplished by combining software and hardware means. In other words, the latency estimation is implemented on a software level (SoC level), and the de-noising is implemented on a hardware level. Thus, a consumption of computing power is reduced on one hand, and, on the other hand, the enormous software memory space is utilized, thereby taking the combined advantages of both the software and the hardware.

In an implementation, after the acquisition of the system audio signal, the electronic device may further output the system audio signal to the vehicle mounted terminal, to enable the vehicle mounted terminal to play the system audio signal. In this case, in addition to the to-be-recognized voice signal, the collected second microphone signal includes the audio signal played by the vehicle mounted terminal that is collected by the microphone.

Step 104: performing recognition on the to-be-recognized voice signal.

Optionally, when performing the recognition on the to-be-recognized voice signal, the to-be-recognized voice signal may be output to a voice recognition engine for recognition. As for the specific voice recognition mode, conventional voice recognition modes may be used, which is not limited in this embodiment.

According to the voice recognition method in embodiments of the present application, the reference signal used for de-noising processing may be obtained by means of the latency value derived by means of the latency estimation, so as to ensure that the reference signal and the corresponding microphone signal are in alignment and enhance the de-noising effect of the microphone signal, thereby enhancing the recognition effect of the voice signal from the microphone signal.

The latency estimation process in the foregoing step 101 is:
performing the following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
where the first reference signal of the current time period is obtained by processing (e.g., buffering) a system audio signal of the current time period by using a first latency value obtained in a previous time period. The first latency value may be a difference in arrival time between the first microphone signal of the current time period and a corresponding system audio signal, and may be acquired by comparative analysis of the first reference signal, the first microphone signal and the de-noised signal of the current time period.

The current time period may be understood as a time period in which the current latency estimation is performed. With the latency estimation process being performed cyclically, the obtained latency values tend to converge and approach stability. The foregoing preset convergence condition may be that the first latency value is less than a preset threshold. The first latency value satisfying the preset convergence condition is the estimated latency value. For example, the preset threshold is 20 ms.

Further, when a new latency value is detected, the electronic device may restart the cyclically performed process, to obtain the new latency value, process a corresponding system audio signal by using the new latency value to obtain a third reference signal, and perform de-noising processing on a collected third microphone signal according to the third reference signal, to obtain a to-be-recognized voice signal. In this way, a new latency value can be acquired rapidly and adaptively following the variation of latency value, thereby ensuring that the subsequently acquired reference signal and the corresponding microphone signal are in alignment.

Optionally, the detection of the occurrence of a new latency value may include: performing a latency estimation according to the obtained to-be-recognized voice signal, the second reference signal and the second microphone signal, and detecting whether the obtained latency value satisfies the preset convergence condition, and if the obtained latency value satisfies the preset convergence condition, then determining that no new latency value occurs, otherwise, determining that a new latency value occurs; alternatively, detecting a distortion level of a signal de-noised based on the estimated latency value, and if there is severe distortion, then determining that a new latency value occurs, otherwise, determining that no new latency value occurs.

A voice recognition process according to a specific example of the present application is explained hereinafter with reference to Fig. 2.

In a specific example of the present application, as shown in Fig. 2, a smart rearview mirror is connected to the vehicle mounted terminal through a USB, and both the smart rearview mirror and the vehicle mounted terminal are installed with applets for interconnection (such as CarLife); the smart rearview mirror outputs an audio signal (e.g., audio signal of a song) to the vehicle mounted terminal to enable the vehicle mounted terminal to play the audio signal. During the playback of the audio signal by the vehicle mounted terminal, if a user inputs a voice control signal to the smart rearview mirror to adjust the song being played by the vehicle mounted terminal, the voice recognition process of the smart rearview mirror may include:
1) A microphone array collects signals, where the signals corresponding to two interfaces, namely MicO signal and Mic1 signal, at least include a voice control signal input by a user and an audio signal played by the vehicle mounted terminal; the DSP acquires the microphone signals, then performs echo de-noising processing thereon with a reference signal (the Ref signal input from the main SoC, which is obtained by buffering a corresponding system audio signal), to obtain a de-noised signal (Line out signal, which is essentially the voice control signal input by the user);
2) The DSP combines the MicO signal, the Mic1 signal, the Ref signal and the Line out signal into a dual-channel I2S signal in a form as shown in the following table 1 for output; the DSP may support I2S output in time-division multiplexing (TDM) format;

**Table 1**

| | First 16 bits | Last 16 bits |
|---|---|---|
| Left channel | Mic0 | Line out |
| Right channel | Mic1 | Ref |

3) The main SoC receives the I2S signal outputted by the DSP, and encapsulates a corresponding AudioRecord interface at a software layer, to enable the App layer to acquire the I2S signal outputted by the DSP;
4) Similarly, the main SoC collects the system audio signal outputted by a codec, encapsulates a corresponding AudioRecord interface at a software layer, to enable the App layer to acquire the system audio signal and transmit the system audio signal to the vehicle mounted terminal for playback through a USB channel;
5) The App layer, after acquiring the I2S signal outputted by the DSP, parses the I2S signal according to the protocol into original signals, namely, the MicO signal, the Mic1 signal, the Ref signal and the Line out signal, to perform a latency estimation, that is, estimate a difference in arrival time between the microphone signal and a corresponding system audio signal to obtain an estimated latency value (also known as latency value); at this point, the Line out signal may be outputted directly to a voice recognition engine for recognition;
6) For the estimated latency value, the system layer may release an interface to receive the estimated latency value, and adjust the reference signal inputted to the DSP according to the estimated latency value; for example, the system layer transfers the estimated latency value to an ROM layer for processing, and the ROM layer automatically buffers the current system audio signal in accordance to the estimated latency value and then outputs the buffered system audio signal as the reference signal to the DSP.

It is noted that, the foregoing latency estimation process may be performed cyclically by means of a control signal, until an obtained estimated latency value satisfies a preset convergence condition, e.g., converging to less than 20 ms. That the preset convergence condition is satisfied means the reference signal and the microphone signal are in alignment and the echo de-noising requirements are met. At this time, the registration of the estimated latency value can be stopped automatically until a new estimated latency value occurs. When the registration of the estimated latency value is stopped, the reference signal inputted to the DSP may be adjusted based on a currently registered estimated latency value, to accomplish the recognition of the voice control signal inputted by the user. In this way, in the case of car-machine connectivity, even if the audio playback by the vehicle mounted terminal suffers from significant and unstable transmission latency, the noise reduction requirement during recognition of the inputted voice may still be met, thereby enhancing voice recognition effect.

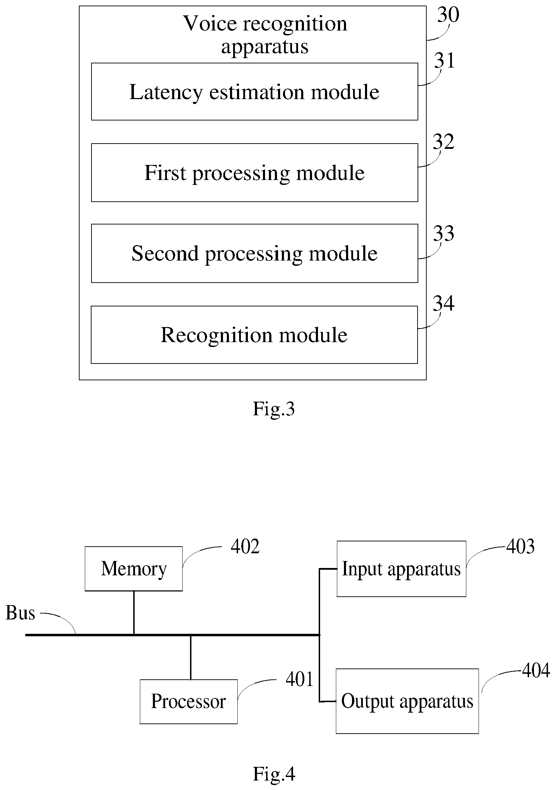

Referring to Fig. 3, a schematic structural diagram of a voice recognition apparatus according to an embodiment of the present application is illustrated. As shown in Fig. 3, the voice recognition apparatus 30 includes:
a latency estimation module 31, configured to perform a latency estimation according to a first microphone signal and a first reference signal in a preset time period to obtain a latency value;
a first processing module 32, configured to acquire a system audio signal, and processing the system audio signal by using the latency value to obtain a second reference signal;
a second processing module 33, configured to perform de-noising processing on a collected second microphone signal according to the second reference signal, to obtain a to-be-recognized voice signal; and
a recognition module 34, configured to perform recognition on the to-be-recognized voice signal.

The latency estimation module 31 is specifically configured to perform following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
where the first reference signal of the current time period is obtained by processing a system audio signal of the current time period by using a first latency value obtained in a previous time period.

Optionally, the latency estimation module 31 is further configured to restart the cyclically performed process when a new latency value is detected, to obtain the new latency value;
the first processing module 32 is further configured to process a corresponding system audio signal by using the new latency value to obtain a third reference signal;
the second processing module 33 is further configured to perform de-noising processing on a collected third microphone signal according to the third reference signal, to obtain a to-be-recognized voice signal.

Optionally, the first processing module 32 is specifically configured to buffer the system audio signal for a duration of the latency value, to obtain the second reference signal.

Optionally, the apparatus further includes:
an output module, configured to output the system audio signal to a vehicle mounted terminal, to enable the vehicle mounted terminal to play the system audio signal;
where the second microphone signal includes an audio signal collected by a microphone that is played by the vehicle mounted terminal.

It may be understood that, the voice recognition apparatus 30 according to the embodiment of the present application can implement various processes implemented in the method embodiment as shown in Fig. 1, and can achieve the same beneficial effects. To avoid repetition, a detailed description thereof is omitted herein.

According to embodiments of the present application, an electronic device and a readable storage medium are further provided.

Referring to Fig. 4, a block diagram of an electronic device configured to implement the voice recognition method according to embodiments of the present application is illustrated. The electronic device is intended to represent various forms of digital computers, such as laptop computer, desktop computer, workstation, personal digital assistant, server, blade server, mainframe and other suitable computers. The electronic device may represent various forms of mobile devices as well, such as personal digital processing device, cellular phone, smart phone, wearable device and other similar computing apparatus. The components, the connections and relationships therebetween and the functions thereof described herein are merely illustrative examples, and are not intended to limit the implementation of this application described and/or claimed herein.

As shown in Fig. 4, the electronic device includes: one or more processors 401, a memory 402, and interfaces including a high speed interface and a low speed interface, which is used for connecting various parts. The various parts are interconnected by different buses, and may be installed on a common motherboard or installed in another manner as required. The processor may process instructions configured to be executed in the electronic device, and the instructions include those stored in the memory and used for displaying graphic information of GUI on an external input/output apparatus (e.g., a display device coupled to the interface). In other implementations, if needed, multiple processors and/or multiple buses may be used together with multiple memories. Similarly, multiple electronic devices may connected, where each electronic device provides a part of necessary operations (e.g., serving as a server array, a group of blade servers, or a multi-processor system). Fig. 4 illustrates a single processor 401 as an example.

The memory 402 is the non-transitory computer readable storage medium according to the present application. The memory stores instructions configured to be executed by at least one processor, so that the at least one processor implements the voice recognition method according to the present application. The non-transitory computer readable storage medium according to the present application stores computer instructions configured to be executed by a computer to implement the voice recognition method according to the present application.

As a non-transitory computer readable storage medium, the memory 402 may be used to store a non-transitory software program, a non-transitory computer executable program and modules, such as the program instructions/modules corresponding to the voice recognition method according to some embodiments of the present application (e.g., the latency estimation module 31, the first processing module 32, the second processing module 33 and the recognition module 34 as shown in Fig. 3). The processor 401 is configured to perform various functional applications of server and data processing, that is, to implement the voice recognition method according to the foregoing method embodiments, by running non-transitory software program, instructions and modules stored in the memory 402.

The memory 402 may include a program storage zone and a data storage zone. The program storage zone may store an operating system, and an application program required by at least one function. The data storage zone may store data created according to the usage of the electronic device and the like. Further, the memory 402 may include a high speed random access memory, or a non-transitory memory, e.g., at least one magnetic disk storage device, a flash memory device, or other non-transitory solid-state storage device. In some embodiments, the memory 402 optionally includes a memory located remote to the processor 401. The remote memory may be connected to the electronic device via a network. For example, the network includes, but is not limited to: Internet, intranet, local area network (LAN), mobile communication network or a combination thereof.

The electronic device for implementing the voice recognition method may further include: an input apparatus 403 and an output apparatus 404. The processor 401, the memory 402, the input apparatus 403 and the output apparatus 404 may be connected by bus or in other manner. In Fig. 4, a connection by bus is illustrated as an example.

The input device 403 may receive inputted numeric or character information, and generate key signal inputs related to the user settings and functional control of the electronic device for implementing the voice recognition method. The input device 403 may be, for example, a touch screen, keypad, mouse, trackpad, touchpad, indication rod, one or more mouse buttons, trackball, joystick, or the like. The output device 404 may include a display device, auxiliary lighting device (e.g., an LED), tactile feedback apparatus (e.g., a vibration motor) and the like. The display device may include, but is not limited to, a liquid crystal display (LCD), light-emitting diode (LED) display and plasma display. In some implementations, the display device may be a touch screen.

The various implementations of the system and technique described herein may be implemented in a digital electronic circuit system, integrated circuit system, application specific integrated circuit (ASIC), computer hardware, firmware, software and/or a combination thereof. The implementations may include: the system and technique are implemented in one or more computer programs configured to be executed and/or interpreted by a programmable system including at least one programmable processor. The programmable processor may be a special purpose or general purpose programmable processor, and may receive data and instructions from a storage system, at least one input apparatus and at least one output apparatus, and transmit data and instructions to the storage system, the at least one input apparatus and the at least one output apparatus.

The computer program (also known as program, software, software application, or code) includes machine instructions for programmable processor, and may be implemented by using procedural and/or object-oriented programming languages and/or assembly/machine languages. As used herein, the terms "machine readable medium" and "computer readable medium" refer to any computer program product, device and/or apparatus (e.g., a magnetic disk, optical disk, memory, programmable logic device (PLD)) configured to provide machine instructions and/or data to a programmable processor, and include a machine readable medium receiving machine instructions in the form of machine readable signals. The term "machine readable signal" refers to any signal used to provide machine instructions and/or data to a programmable processor.

To provide for interactions with users, the system and technique described herein may be implemented in the computer. The computer is provided with a display apparatus (e.g., a cathode ray tube (CRT) or liquid crystal display (LCD) display) for displaying information to users, and a keyboard and pointing apparatus (e.g., a mouse or trackball). A user may provide input to the computer through the keyboard and the pointing device. Other types of apparatus may be provided for the interactions with users, for example, the feedbacks provided to users may be any form of sensory feedbacks (e.g., visual feedback, auditory feedback, or tactile feedback); and the user input may be received in any form (including sound input, voice input or tactile input).

The system and technique described herein may be implemented in a computing system including a background component (e.g., serving as a data server), a computing system including a middleware component (e.g., an application server), a computing system including a front-end component (e.g., a user computer provided with a GUI or web browser by which users may interact with the implementation of the system and technique described herein), or a computing system including any combination of such background component, middleware component or front-end component. The components of the system may be interconnected by digital data communication in any form or medium (e.g., communication network). The communication network includes for example: LAN, wide area network (WAN) and Internet.

The computer system may include a client and a server. Generally, the client and the server are far from each other and interact with each other through a communication network. The client-server relationship is generated by computer programs running on respective computers and having a client-server relation therebetween.

According to the technical solutions of the embodiments of the present application, the reference signal used for de-noising processing may be obtained based on the latency value derived by latency estimation, so as to ensure that the reference signal and corresponding microphone signal are in alignment and enhance the de-noising effect of the microphone signal, thereby enhancing the recognition effect of voice signal from the microphone signal.

It is understood, various forms of processes as shown above may be used, and steps thereof may be rearranged, added or deleted. For example, as long as a desired outcome of the technical solutions disclosed in the present application is achieved, the steps set forth in the present application may be performed in parallel, sequentially, or in a different order, which is not limited herein, while subject-matter resulting therefrom is only according to the invention if it falls within the scope of the appended claims.

It is appreciated by those skilled in the art, various modifications, combinations, sub-combinations and replacements may be made according to design requirements or other considerations.

## Claims

1. A voice recognition method, comprising:
performing a latency estimation according to a first microphone signal and a first reference signal in a preset time period to obtain a latency value;
acquiring a system audio signal, and processing the system audio signal by using the latency value to obtain a second reference signal;
performing de-noising processing on a collected second microphone signal according to the second reference signal, to obtain a to-be-recognized voice signal; and
performing recognition on the to-be-recognized voice signal;
wherein the performing the latency estimation according to the first microphone signal and the first reference signal in the preset time period to obtain the latency value comprises:
performing the following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
wherein the first reference signal of the current time period is obtained by processing a system audio signal of the current time period by using a first latency value obtained in a previous time period.

2. The voice recognition method according to claim 1, further comprising:
restarting the cyclically performed process when a new latency value is detected, to obtain the new latency value, processing a corresponding system audio signal by using the new latency value to obtain a third reference signal, and performing de-noising processing on a collected third microphone signal according to the third reference signal, to obtain a to-be-recognized voice signal.

3. The voice recognition method according to claim 1, wherein the processing the system audio signal by using the latency value to obtain the second reference signal comprises:
buffering the system audio signal for a duration of the latency value, to obtain the second reference signal.

4. The voice recognition method according to any one of claims 1 to 3, wherein, after the acquiring the system audio signal, the method further comprises:
outputting the system audio signal to a vehicle mounted terminal, to enable the vehicle mounted terminal to play the system audio signal;
wherein the second microphone signal comprises an audio signal collected by a microphone that is played by the vehicle mounted terminal.

5. A voice recognition apparatus, comprisings:
a latency estimation module, configured to perform a latency estimation according to a first microphone signal and a first reference signal in a preset time period to obtain a latency value;
a first processing module, configured to acquire a system audio signal, and to process the system audio signal by using the latency value to obtain a second reference signal;
a second processing module, configured to perform de-noising processing on a collected second microphone signal according to the second reference signal, to obtain a to-be-recognized voice signal; and
a recognition module, configured to perform recognition on the to-be-recognized voice signal;
wherein the latency estimation module is specifically configured to perform the following process cyclically, until an obtained first latency value meets a preset convergence condition:
performing echo de-noising processing on a first microphone signal collected in a current time period by using a first reference signal of the current time period, to obtain a de-noised signal; and
performing a latency estimation according to the first reference signal, the first microphone signal and the de-noised signal of the current time period, to obtain a first latency value;
wherein the first reference signal of the current time period is obtained by processing a system audio signal of the current time period by using a first latency value obtained in a previous time period.

6. The voice recognition apparatus according to claim 5, wherein
the latency estimation module is further configured to restart the cyclically performed process when a new latency value is detected, to obtain the new latency value;
the first processing module is further configured to process a corresponding system audio signal by using the new latency value to obtain a third reference signal;
the second processing module is further configured to perform de-noising processing on a collected third microphone signal according to the third reference signal, to obtain a to-be-recognized voice signal.

7. The voice recognition apparatus according to claim 5, wherein the first processing module is specifically configured to buffer the system audio signal for a duration of the latency value, to obtain the second reference signal.

8. The voice recognition apparatus according to any one of claims 5 to 7, wherein the apparatus further comprises:
an output module, configured to output the system audio signal to a vehicle mounted terminal, to enable the vehicle mounted terminal to play the system audio signal;
wherein the second microphone signal comprises an audio signal collected by a microphone that is played by the vehicle mounted terminal.

9. An electronic device, comprising:
at least one processor; and
a memory communicatively connected to the at least one processor;
wherein the memory stores therein instructions executable by the at least one processor, and when executed by the at least one processor, the instructions cause the at least one processor to implement the voice recognition method according to any one of claims 1 to 4.

10. A non-transitory computer readable storage medium storing therein computer instructions, wherein the computer instructions are configured to, when executed by a computer, cause the computer to implement the voice recognition method according to any one of claims 1 to 4.

## Patentansprüche

1. Spracherkennungsverfahren, das Folgendes umfasst:
Durchführen einer Latenzschätzung gemäß einem ersten Mikrofonsignal und einem ersten Referenzsignal in einer voreingestellten Zeitspanne, um einen Latenzwert zu erhalten;
Erheben eines Systemaudiosignals und Verarbeiten des Systemaudiosignals unter Verwenden des Latenzwerts, um ein zweites Referenzsignal zu erhalten;
Durchführen von Entrauschungsverarbeitung an einem gesammelten zweiten Mikrofonsignal gemäß dem zweiten Referenzsignal, um ein zu erkennendes Sprachsignal zu erhalten; und
Durchführen von Erkennung an dem zu erkennenden Sprachsignal;
wobei das Durchführen der Latenzschätzung gemäß dem ersten Mikrofonsignal und dem ersten Referenzsignal in der voreingestellten Zeitspanne, um den Latenzwert zu erhalten, Folgendes umfasst:
Durchführen des folgenden Prozesses zyklisch, bis ein erhaltener erster Latenzwert eine voreingestellte Konvergenzbedingung erfüllt:
Durchführen von Echo-Entrauschungsverarbeitung an einem ersten Mikrofonsignal, das in einer aktuellen Zeitspanne unter Verwenden eines ersten Referenzsignals der aktuellen Zeitspanne gesammelt wird, um ein entrauschtes Signal zu erhalten; und
Durchführen einer Latenzschätzung gemäß dem ersten Referenzsignal, dem ersten Mikrofonsignal und dem entrauschten Signal der aktuellen Zeitspanne, um einen ersten Latenzwert zu erhalten;
wobei das erste Referenzsignal der aktuellen Zeitspanne durch Verarbeiten eines Systemaudiosignals der aktuellen Zeitspanne unter Verwenden eines ersten Latenzwerts, der in einer vorhergehenden Zeitspanne erhalten wird, erhalten wird.

2. Spracherkennungsverfahren nach Anspruch 1, das weiter Folgendes umfasst:
Neustarten des zyklisch durchgeführten Prozesses, wenn ein neuer Latenzwert erfasst wird, um den neuen Latenzwert zu erhalten, Verarbeiten eines entsprechenden Systemaudiosignals unter Verwenden des neuen Latenzwerts, um ein drittes Referenzsignal zu erhalten, und Durchführen von Entrauschungsverarbeitung an einem gesammelten dritten Mikrofonsignal gemäß dem dritten Referenzsignal, um ein zu erkennendes Sprachsignal zu erhalten.

3. Spracherkennungsverfahren nach Anspruch 1, wobei das Verarbeiten des Systemaudiosignals unter Verwenden des Latenzwerts zum Erhalten des zweiten Referenzsignals Folgendes umfasst:
Puffern des Systemaudiosignals während einer Dauer des Latenzwerts, um das zweite Referenzsignal zu erhalten.

4. Spracherkennungsverfahren nach einem der Ansprüche 1 bis 3, wobei das Verfahren nach dem Erheben des Systemaudiosignals weiter Folgendes umfasst:
Ausgeben des Systemaudiosignals an ein fahrzeugmontiertes Endgerät, um es dem fahrzeugmontierten Endgerät zu ermöglichen, das Systemaudiosignal wiederzugeben;
wobei das zweite Mikrofonsignal ein Audiosignal umfasst, das von einem Mikrofon gesammelt wird, das von dem fahrzeugmontierten Endgerät wiedergegeben wird.

5. Spracherkennungseinrichtung, die Folgendes umfasst:
ein Latenzschätzungsmodul, das dazu konfiguriert ist, eine Latenzschätzung gemäß einem ersten Mikrofonsignal und einem ersten Referenzsignal in einer voreingestellten Zeitspanne durchzuführen, um einen Latenzwert zu erhalten;
ein erstes Verarbeitungsmodul, das dazu konfiguriert ist, ein Systemaudiosignal zu erheben und das Systemaudiosignal unter Verwenden des Latenzwerts zu verarbeiten, um ein zweites Referenzsignal zu erhalten;
ein zweites Verarbeitungsmodul, das dazu konfiguriert ist, Entrauschungsverarbeitung an einem gesammelten zweiten Mikrofonsignal gemäß dem zweiten Referenzsignal durchzuführen, um ein zu erkennendes Sprachsignal zu erhalten; und
ein Erkennungsmodul, das dazu konfiguriert ist, Erkennung an dem zu erkennenden Sprachsignal durchzuführen;
wobei das Latenzschätzungsmodul spezifisch dazu konfiguriert ist, den folgenden Prozess zyklisch durchzuführen, bis ein erhaltene erster Latenzwert eine voreingestellte Konvergenzbedingung erfüllt:
Durchführen von Echo-Entrauschungsverarbeitung an einem ersten Mikrofonsignal, das in einer aktuellen Zeitspanne unter Verwenden eines ersten Referenzsignals der aktuellen Zeitspanne gesammelt wird, um ein entrauschtes Signal zu erhalten; und
Durchführen einer Latenzschätzung gemäß dem ersten Referenzsignal, dem ersten Mikrofonsignal und dem entrauschten Signal der aktuellen Zeitspanne, um einen ersten Latenzwert zu erhalten;
wobei das erste Referenzsignal der aktuellen Zeitspanne durch Verarbeiten eines Systemaudiosignals der aktuellen Zeitspanne unter Verwenden eines ersten Latenzwerts, der in einer vorhergehenden Zeitspanne erhalten wird, erhalten wird.

6. Spracherkennungseinrichtung nach Anspruch 5, wobei
das Latenzschätzungsmodul weiter dazu konfiguriert ist, den zyklisch durchgeführten Prozess neu zu starten, wenn ein neuer Latenzwert erfasst wird, um den neuen Latenzschwellenwert zu erhalten;
das erste Verarbeitungsmodul weiter dazu konfiguriert ist, ein entsprechendes Systemaudiosignal unter Verwenden des neuen Latenzwerts zu verarbeiten, um ein drittes Referenzsignal zu erhalten;
wobei das zweite Verarbeitungsmodul weiter dazu konfiguriert ist, Entrauschungsverarbeitung an einem gesammelten dritten Mikrofonsignal gemäß dem dritten Referenzsignal durchzuführen, um ein zu erkennendes Sprachsignal zu erhalten.

7. Spracherkennungseinrichtung nach Anspruch 5, wobei das erste Verarbeitungsmodul spezifisch dazu konfiguriert ist, das Systemaudiosignal während einer Dauer des Latenzwerts zu puffern, um das zweite Referenzsignal zu erhalten.

8. Spracherkennungseinrichtung nach einem der Ansprüche 5 bis 7, wobei die Einrichtung weiter Folgendes umfasst:
ein Ausgangsmodul, das dazu konfiguriert ist, das Systemaudiosignal an ein fahrzeugmontiertes Endgerät auszugeben, um es dem fahrzeugmontierten Endgerät zu ermöglichen, das Systemaudiosignal wiederzugeben;
wobei das zweite Mikrofonsignal ein Audiosignal umfasst, das von einem Mikrofon gesammelt wird, das von dem fahrzeugmontierten Endgerät wiedergegeben wird.

9. Elektronische Vorrichtung, die Folgendes umfasst:
mindestens einen Prozessor; und
einen Speicher, der kommunikativ mit dem mindestens einen Prozessor verbunden ist;
wobei der Speicher darin Anweisungen speichert, die von dem mindestens einen Prozessor ausführbar sind, und, wenn sie von dem mindestens einen Prozessor ausgeführt werden, die Anweisungen den mindestens einen Prozessor veranlassen, das Spracherkennungsverfahren nach einem der Ansprüche 1 bis 4 zu implementieren.

10. Nichtflüchtiges computerlesbares Speichermedium, in dem Computeranweisungen gespeichert sind, wobei die Computeranweisungen dazu konfiguriert sind, wenn sie von einem Computer ausgeführt werden, den Computer zu veranlassen, das Spracherkennungsverfahren nach einem der Ansprüche 1 bis 4 zu implementieren.

## Revendications

1. Procédé de reconnaissance vocale, comprenant :
la mise en œuvre d'une estimation de latence en fonction d'un premier signal de microphone et d'un premier signal de référence dans une période de temps prédéfinie pour obtenir une valeur de latence ;
l'acquisition d'un signal audio de système et le traitement du signal audio de système en utilisant la valeur de latence pour obtenir un second signal de référence ;
la mise en œuvre d'un traitement de débruitage sur un deuxième signal de microphone collecté en fonction du deuxième signal de référence, pour obtenir un signal vocal à reconnaître ; et
la mise en œuvre d'une reconnaissance sur le signal vocal à reconnaître ;
dans lequel la mise en œuvre de l'estimation de latence en fonction du premier signal de microphone et du premier signal de référence dans la période de temps prédéfinie pour obtenir une valeur de latence comprend :
la mise en œuvre du processus suivant de manière cyclique, jusqu'à ce qu'une première valeur de latence obtenue satisfasse à une condition de convergence prédéfinie :
la mise en œuvre d'un traitement de débruitage d'écho sur un premier signal de microphone collecté dans une période de temps actuelle en utilisant un premier signal de référence de la période de temps actuelle, pour obtenir un signal débruité ; et
la mise en œuvre d'une estimation de latence en fonction du premier signal de référence, du premier signal de microphone et du signal débruité de la période de temps actuelle, pour obtenir une première valeur de latence ;
dans lequel le premier signal de référence de la période de temps actuelle est obtenu en traitant un signal audio de système de la période de temps actuelle en utilisant une première valeur de latence obtenue dans une période de temps précédente.

2. Procédé de reconnaissance vocale selon la revendication 1, comprenant en outre :
le redémarrage du processus mis en œuvre de manière cyclique lorsqu'une nouvelle valeur de latence est détectée, pour obtenir la nouvelle valeur de latence, le traitement d'un signal audio de système correspondant en utilisant la nouvelle valeur de latence pour obtenir un troisième signal de référence, et la mise en œuvre d'un traitement de débruitage sur un troisième signal de microphone collecté en fonction du troisième signal de référence, pour obtenir un signal vocal à reconnaître.

3. Procédé de reconnaissance vocale selon la revendication 1, dans lequel le traitement du signal audio de système en utilisant la valeur de latence pour obtenir le deuxième signal de référence comprend :
la mise en mémoire-tampon du signal audio de système pendant une durée de la valeur de latence, pour obtenir le deuxième signal de référence.

4. Procédé de reconnaissance vocale selon l'une quelconque des revendications 1 à 3, dans lequel, après l'acquisition du signal audio de système, le procédé comprend en outre :
la sortie du signal audio de système vers un terminal monté sur véhicule, pour permettre au terminal monté sur véhicule de lire le signal audio de système ;
dans lequel le deuxième signal de microphone comprend un signal audio collecté par un microphone qui est lu par le terminal monté sur véhicule.

5. Appareil de reconnaissance vocale, comprenant :
un module d'estimation de latence, configuré pour mettre en œuvre une estimation de latence en fonction d'un premier signal de microphone et d'un premier signal de référence dans une période de temps prédéfinie pour obtenir une valeur de latence ;
un premier module de traitement, configuré pour acquérir un signal audio de système, et pour traiter le signal audio de système en utilisant la valeur de latence pour obtenir un deuxième signal de référence ;
un second module de traitement, configuré pour mettre en œuvre un traitement de débruitage sur un deuxième signal de microphone collecté en fonction du deuxième signal de référence, pour obtenir un signal vocal à reconnaître ; et
un module de reconnaissance, configuré pour mettre en œuvre une reconnaissance sur le signal vocal à reconnaître ;
dans lequel le module d'estimation de latence est spécifiquement configuré pour mettre en œuvre le processus suivant de manière cyclique, jusqu'à ce qu'une première valeur de latence obtenue satisfasse à une condition de convergence prédéfinie :
la mise en œuvre d'un traitement de débruitage d'écho sur un premier signal de microphone collecté dans une période de temps actuelle en utilisant un premier signal de référence de la période de temps actuelle, pour obtenir un signal débruité ; et
la mise en œuvre d'une estimation de latence en fonction du premier signal de référence, du premier signal de microphone et du signal débruité de la période de temps actuelle, pour obtenir une première valeur de latence ;
dans lequel le premier signal de référence de la période de temps actuelle est obtenu en traitant un signal audio de système de la période de temps actuelle en utilisant une première valeur de latence obtenue dans une période de temps précédente.

6. Appareil de reconnaissance vocale selon la revendication 5, dans lequel
le module d'estimation de latence est en outre configuré pour redémarrer le processus mis en œuvre de manière cyclique lorsqu'une nouvelle valeur de latence est détectée, pour obtenir la nouvelle valeur de latence ;
le premier module de traitement est en outre configuré pour traiter un signal audio de système correspondant en utilisant la nouvelle valeur de latence pour obtenir un troisième signal de référence ;
le second module de traitement est en outre configuré pour mettre en œuvre un traitement de débruitage sur un troisième signal de microphone collecté en fonction du troisième signal de référence, pour obtenir un signal vocal à reconnaître.

7. Appareil de reconnaissance vocale selon la revendication 5, dans lequel le premier module de traitement est spécifiquement configuré pour mettre en mémoire-tampon le signal audio de système pendant une durée de la valeur de latence, pour obtenir le deuxième signal de référence.

8. Appareil de reconnaissance vocale selon l'une quelconque des revendications 5 à 7, dans lequel l'appareil comprend en outre :
un module de sortie, configuré pour sortir le signal audio de système vers un terminal monté sur véhicule, pour permettre au terminal monté sur véhicule de lire le signal audio de système ;
dans lequel le deuxième signal de microphone comprend un signal audio collecté par un microphone qui est lu par le terminal monté sur véhicule.

9. Dispositif électronique, comprenant :
au moins un processeur ; et
une mémoire connectée en communication à l'au moins un processeur ;
dans lequel la mémoire stocke dans celle-ci des instructions exécutables par le au moins un processeur et, quand elles sont exécutées par le au moins un processeur, les instructions amènent le au moins un processeur à mettre en œuvre le procédé de reconnaissance vocale selon l'une quelconque des revendications 1 à 4.

10. Support de stockage non transitoire lisible par ordinateur stockant dans celui-ci des instructions informatiques, dans lequel les instructions informatiques sont configurées pour, quand elles sont exécutées par un ordinateur, amener l'ordinateur à mettre en œuvre le procédé de reconnaissance vocale selon l'une quelconque des revendications 1 à 4.
